(19) Europäisches Patentamt
European Patent Office
Office européen des brevets

(11) **EP 4 467 941 A1**

(12) **EUROPÄISCHE PATENTANMELDUNG**

(43) Veröffentlichungstag:
**27.11.2024 Patentblatt 2024/48**

(21) Anmeldenummer: **23020247.5**

(22) Anmeldetag: **25.05.2023**

(51) Internationale Patentklassifikation (IPC):
**G01H 1/00** *(2006.01)* **G01G 3/16** *(2006.01)*

(52) Gemeinsame Patentklassifikation (CPC):
**G01H 1/00; G01G 3/16; G01G 19/12**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Innoperform GmbH
02694 Malschwitz-Preititz (DE)**

(72) Erfinder:
• **Brenner, Thomas
01309 Dresden (DE)**

• **Schulze, Martin
02694 Malschwitz (DE)**
• **Kockler, Achim
01445 Radebeul (DE)**

(74) Vertreter: **Kinnstätter, Klaus
Am Bach 8
96129 Strullendorf (DE)**

Bemerkungen:
Geänderte Patentansprüche gemäss Regel 137(2)
EPÜ.

(54) **HOCHGENAUE AUSWERTUNG VON WEGABHÄNGIGEN SIGNALEN**

(57) Eine Auswertungseinrichtung (3) nimmt von einer Anzahl von mit einer Einrichtung (1) verbundenen Sensoren (2) während eines Erfassungszeitraums (T) kontinuierlich ein jeweiliges Signal (ax, ay, az) entgegen und speichert es ab, so dass die Auswertungseinrichtung (3) für das Signal (ax, ay, az) einen Signalverlauf generiert. Die Signale (ax, ay, az) sind für einen von der Einrichtung (1) am Ort des jeweiligen Sensors (2) in einer jeweiligen Richtung (x, y, z) zurückgelegten Weg oder für eine zeitliche Ableitung dieses Weges charakteristisch. Die Auswertungseinrichtung (3) bestimmt einen im Erfassungszeitraum (T') enthaltenen Zeitraum als Auswertungszeitraum (T) und unterzieht den Signalverlauf des Auswertungszeitraums einer Bandpassfilterung mit einer unteren und einer oberen Grenzfrequenz (fmin, fmax) und ermittelt so einen gefilterten Signalverlauf. Die Auswertungseinrichtung (3) setzt eine parametrierte Form einer gedämpften harmonischen Schwingung an und ermittelt mittels einer Regression des gefilterten Signalverlaufs gemäß einem Optimierungskriterium die Frequenz (f) der gedämpften harmonischen Schwingung. Die so ermittelte Frequenz (f) legt die Auswertungseinrichtung (3) als eine Eigenfrequenz (EFi) der Einrichtung (1) fest. Die Auswertungseinrichtung (3) ermittelt unter Verwertung der für die Signale (ax, ay, az) der Sensoren (2) ermittelten Eigenfrequenzen (EFi) eine Eigenschaft (m, m1, m2, k) der Einrichtung (1).

Fig. 1

**EP 4 467 941 A1**

**Beschreibung**

Die vorliegende Erfindung geht aus von einem Auswertungsverfahren für Signale einer Anzahl von mit einer Einrichtung verbundenen Sensoren durch eine Auswertungseinrichtung,

- wobei die Auswertungseinrichtung ein jeweiliges von einem der Sensoren erfasstes Signal während eines Erfassungszeitraums kontinuierlich entgegennimmt und speichert, so dass die Auswertungseinrichtung für das Signal einen Signalverlauf generiert,
- wobei die Signale für einen von der Einrichtung am Ort des jeweiligen Sensors in einer jeweiligen Richtung zurückgelegten Weg oder für eine zeitliche Ableitung dieses Weges charakteristisch sind,
- wobei die Auswertungseinrichtung durch Auswerten des gespeicherten Signalverlaufs eine Eigenfrequenz der Einrichtung ermittelt,
- wobei die Auswertungseinrichtung unter Verwertung der für die Signale der Sensoren ermittelten Eigenfrequenzen eine Eigenschaft der Einrichtung ermittelt.

Die Anzahl an Sensoren und hiermit korrespondierend die Anzahl an Signalen kann nach Bedarf bestimmt sein. In manchen Fällen kann es ausreichen, wenn ein einziges Signal erfasst wird. In anderen Fällen werden mehrere Signale erfasst. Dies können nach Bedarf der zurückgelegte Weg oder eine zeitliche Ableitung eines derartigen Weges an unterschiedlichen Orten der Einrichtung, derartige Wege oder deren zeitliche Ableitung in unterschiedlichen Richtungen und Kombinationen hiervon sein.

Die vorliegende Erfindung geht weiterhin aus von einem Computerprogramm, das Maschinencode umfasst, der von einer mit einer Anzahl von Sensoren datentechnisch verbundenen Auswertungseinrichtung abarbeitbar ist, wobei die Abarbeitung des Maschinencodes durch die Auswertungseinrichtung bewirkt, dass die Auswertungseinrichtung ein derartiges Auswertungsverfahren ausführt.

Die vorliegende Erfindung geht weiterhin aus von einer Auswertungseinrichtung, die eine Schnittstelle zur datentechnischen Verbindung mit einer Anzahl von Sensoren aufweist und mit einem derartigen Computerprogramm programmiert ist, so dass sie im Betrieb ein derartiges Auswertungsverfahren ausführt.

Die vorliegende Erfindung geht weiterhin aus von einem System, das aus einer Einrichtung, einer Anzahl von mit der Einrichtung verbundenen Sensoren und einer mit den Sensoren datentechnisch verbundenen Auswertungseinrichtung besteht, wobei die Auswertungseinrichtung so wie vorstehend erläutert ausgebildet ist und im Betrieb ein vorstehend erläutertes Auswertungsverfahren ausführt.

Die genannten Gegenstände sind beispielsweise aus der US 2016/0 265 960 A1 bekannt. Bei der genannten US-Schrift ist die Einrichtung ein Straßenfahrzeug. Es wird sehr detailliert erläutert, wie, ausgehend von der ermittelten Eigenfrequenz, als Eigenschaft der Einrichtung die Masse des Straßenfahrzeugs ermittelt werden kann.

Eine ähnliche Vorgehensweise ist der JP H07 103 834 A zu entnehmen. Weiterhin können auch die DE 10 2006 057 436 A1 und die DE 43 00 677 A1 genannt werden.

Die Vorgehensweisen des Standes der Technik sind theoretisch vollauf befriedigend. In der Praxis stellt sich jedoch die Problematik, dass die Ermittlung der Eigenfrequenz nur mit einer relativ niedrigen Genauigkeit erfolgt, so dass in der Folge auch die weitergehenden Auswertungen (beispielsweise die Ermittlung der Masse der Einrichtung) mit entsprechenden Fehlern behaftet sind.

Die Aufgabe der vorliegenden Erfindung besteht darin, Möglichkeiten zu schaffen, mittels derer eine hochgenaue Auswertung der von den Sensoren zur Verfügung gestellten Signale möglich ist.

Die Aufgabe wird durch ein Auswertungsverfahren mit den Merkmalen des Anspruchs 1 gelöst. Vorteilhafte Ausgestaltungen des Auswertungsverfahrens sind Gegenstand der abhängigen Ansprüche 2 bis 12.

Erfindungsgemäß wird ein Auswertungsverfahren der eingangs genannten Art dadurch ausgestaltet, dass die Auswertungseinrichtung zum Auswerten des gespeicherten Signalverlaufs

- wobei die Auswertungseinrichtung einen im Erfassungszeitraum enthaltenen Zeitraum als Auswertungszeitraum bestimmt,
- den Signalverlauf des Auswertungszeitraums einer Bandpassfilterung mit einer unteren und einer oberen Grenzfrequenz unterzieht und so einen gefilterten Signalverlauf ermittelt,
- eine parametrierte Form einer gedämpften harmonischen Schwingung ansetzt,
- mittels einer Regression des gefilterten Signalverlaufs gemäß einem Optimierungskriterium die Frequenz der gedämpften harmonischen Schwingung ermittelt und
- die so ermittelte Frequenz als eine Eigenfrequenz der Einrichtung festlegt.

Durch die Filterung mittels des Bandpassfilters wird im Rahmen der darauf aufbauenden Auswertung von vornherein nur derjenige Teil des Signalverlaufs betrachtet, der die Signalanteile aus einem bestimmten Frequenzbereich umfasst. Bei geeigneter Wahl des Frequenzbereichs liegt in dem Frequenzbereich genau eine Eigenfrequenz der Einrichtung. Diese Eigenfrequenz kann mittels der Regression hochgenau bestimmt werden. Die Genauigkeit ist in der Praxis um mindestens eine Größenordnung (= Faktor 10) besser als die Vorgehensweisen des Standes der Technik, oftmals sogar um zwei Größenordnungen. Das Optimierungskriterium der Regression kann nach Bedarf bestimmt sein. Üblich ist beispielsweise eine Optimierung nach der Methode der Minimierung der quadratischen Abweichungen.

Das vorherige Entgegennehmen und Speichern der Signale kann auf übliche Art und Weise erfolgen. Die Auswertung der Signale ist jedoch umso besser, je höher die Abtastrate ist, mit der die Signale erfasst werden, je länger der Auswertungszeitraum ist, innerhalb dessen die Signale ausgewertet werden, und je genauer die Signale, also im Ergebnis der Weg oder dessen zeitliche Ableitung, erfasst werden. In Versuchen haben sich für einige Anwendungen, insbesondere bei Straßenfahrzeugen, eine Abtastrate von 1000 oder mehr Abtastungen pro Sekunde und ein Auswertungszeitraum von 4 Sekunden oder mehr als günstig erwiesen. Weiterhin hatte sich im Falle der Verwendung von Beschleunigungssensoren als günstig erwiesen, die Sensorsignale mit einer Erfassungsgenauigkeit von 0,001 m/s$^2$ (entspricht ca. 0,1 mg mit g = Erdbeschleunigung) oder besser zu erfassen.

Die auf der ermittelten Eigenfrequenz aufbauenden Auswertungen können auf die gleiche Art und Weise wie im Stand der Technik auch erfolgen. Hier kann insbesondere auf die bereits erwähnte US 2016/0 265 960 A1 zurückgegriffen werden.

Die untere bzw. obere Grenzfrequenz sind diejenigen Frequenzen, bei welchen das Verhältnis von Amplitude des Ausgangssignals des Bandpassfilters zu Amplitude des Eingangssignals des Bandpassfilters im Vergleich zu einem Bereich, bei dem der Bandpassfilter das genannte Verhältnis maximal ist, auf einen Wert von ca. 0,7 abgesunken ist.

Zur Festlegung der unteren und der oberen Grenzfrequenz ermittelt die Auswertungseinrichtung mittels einer Frequenzanalyse des Signalverlaufs ein zugehöriges Spektrum. Beispielsweise kann die Auswertungseinrichtung eine übliche Fouriertransformation vornehmen, insbesondere eine FFT. Basierend auf dem Spektrum und dem Auswertungszeitraum werden sodann die untere und die obere Grenzfrequenz ermittelt. Die Ermittlung der unteren und der oberen Grenzfrequenz als solche können vollautomatisch durch die Auswertungseinrichtung erfolgen. Alternativ ist eine (auf dem Spektrum basierende) Vorgabe durch eine Bedienperson möglich. Wiederum alternativ ist eine gemischte Vorgehensweise möglich, bei der - beispielsweise - mit oder ohne Unterstützung durch die Auswertungseinrichtung von der Bedienperson eine mittlere Frequenz festgelegt wird und Abstände der unteren und der oberen Grenzfrequenz von der mittleren Frequenz von der Auswertungseinrichtung automatisch festgelegt werden.

Konkret kann beispielsweise eine Frequenz, bei der das Spektrum einen Maximalwert aufweist, als eine mittlere Frequenz bestimmt werden. Diese Bestimmung kann entweder vollautomatisch durch die Auswertungseinrichtung oder beispielsweise durch Ausgeben des ermittelten Spektrums an die Bedienperson nebst nachfolgender Festlegung der mittleren Frequenz in dem ausgegebenen Spektrum durch die Bedienperson erfolgen. Für die Festlegung der mittleren Frequenz wird also das Spektrum verwertet. Weiterhin kann beispielsweise anhand des Auswertungszeitraums ein Mindestabstand bestimmt werden, den die obere und die untere Grenzfrequenz von der mittleren Frequenz mindestens aufweisen müssen. Dieser Wert ist beispielsweise im Falle einer Frequenzanalyse mittels einer Fouriertransformation indirekt proportional zum Auswertungszeitraum und kann somit von der Auswertungseinrichtung auf einfache Weise automatisch ermittelt werden. Basierend auf der mittleren Frequenz und dem Mindestabstand können dann ohne weiteres die obere und die untere Grenzfrequenz ermittelt werden.

Der tatsächliche Abstand der unteren und der oberen Grenzfrequenz kann um einen Sicherheitszuschlag größer als der Mindestabstand sein. Der Sicherheitszuschlag kann beispielsweise 10 % oder 20 % oder 50 % des Mindestabstands betragen. Natürlich sind für den Sicherheitszuschlag auch andere Werte möglich. Gegebenenfalls kann der Sicherheitszuschlag für die untere Grenzfrequenz auch von dem Sicherheitszuschlag für die obere Grenzfrequenz maximale Frequenz verschieden sein. Ein Wert von 100 % des Mindestabstands sollte für den Sicherheitszuschlag jedoch im Regelfall nicht überschritten werden. Der Sicherheitszuschlag kann, sofern er verwendet wird, alternativ automatisch von der Auswertungseinrichtung oder von der Bedienperson festgelegt werden.

In manchen Fällen kann es ausreichen, ohne eigene externe Anregung von außen die sich ergebenden Signale der Sensoren entgegenzunehmen, zu speichern und auszuwerten. In anderen Fällen ist es erforderlich, die Einrichtung vor dem Beginn des Auswertungszeitraums durch eine externe Anregung zu einer Schwingung anzuregen. In diesem Fall erfolgt in aller Regel während des Auswertungszeitraums keine Anregung, so dass während des Auswertungszeitraums eine freie Schwingung der Einrichtung erfolgt.

Vorzugsweise ist die Bandpassfilterung eine Nullphasenfilterung. Das Filtern des Signalverlaufs generiert also keine zeitliche Verschiebung des gefilterten Signalverlaufs und damit keinen von der Frequenz abhängigen Phasenversatz.

Vorzugsweise weist die gedämpfte harmonische Schwingung die Form

$$a(t) = A0 \cdot \exp(-t/T0) \cdot \cos(2\pi ft + \varphi 0) + a0$$

mit den Parametern A0, T0, f, φ0 und a0 auf. Hierbei sind A0 eine Anfangsamplitude, T0 eine Zeitkonstante einer Dämpfung, f die Frequenz (also der eigentlich gesuchte Wert), φ0 ein Phasenversatz, a0 ein Offset der gedämpften Schwingung. a ist die jeweilige Elongation der gedämpften Schwingung, t die Zeit.

In manchen Fällen kann es ausreichen, nur ein einzelnes Signal auszuwerten. In vielen Fällen ist es jedoch sinnvoll, mehrere Signale auszuwerten. Beispielsweise kann die Auswertungseinrichtung für die Signale mehrerer Sensoren jeweils mindestens eine vorläufige Eigenfrequenz der Einrichtung ermitteln und als Eigenfrequenz der Einrichtung mindestens eine der vorläufigen Eigenfrequenzen festlegen, die bei den Signalen mehrerer der Sensoren übereinstimmen. Alternativ ist es möglich, dass die Auswertungseinrichtung für die Signale mehrerer Sensoren jeweils mindestens eine Eigenfrequenz der Einrichtung und hierauf aufbauend eine vorläufige Eigenschaft der Einrichtung ermittelt und als (endgültige) Eigenschaft der Einrichtung einen Wert übernimmt, der für mehrere der Sensoren bzw. deren Signale ermittelt wurde.

Das erfindungsgemäße Auswertungsverfahren ist sehr vielseitig anwendbar. Beispielsweise können damit auch die Frequenzen von Schwingungen von Erdplatten ausgewertet werden. Zumindest in manchen Fällen kann mittels einer erfindungsgemäßen Auswertung für bis zu 6 Stunden im Voraus ein Erdbeben vorhergesagt werden. Auch ist es möglich, beispielsweise bei Maschinen, Fahrzeugen, Schiffen, Flugzeugen, Brücken, Gebäuden usw. die Schwingungen zu erfassen und beispielsweise bei einer Änderung der Eigenfrequenz oder sonstigen Änderungen des Frequenzverhaltens auf Schäden an der Maschine, dem Schiff, dem Flugzeug, der Brücke, dem Gebäude usw. zu schließen, beispielsweise bei Maschinen mit rotierenden Elementen auf Lagerschäden von Drehlagern. Auch ist es möglich, Eigenschwingungen von Antrieben hochgenau zu erfassen. Letzteres kann beispielsweise bei der Analyse von elektrischen Antrieben für Unterseeboote sinnvoll sein, um den Antrieb bereits vor dem Einbau in das Unterseeboot auf einem Prüf- oder Teststand auf Minimierung der Geräuschemission anpassen zu können.

Eine weitere mögliche Anwendung ist ein Pendel. In diesem Fall kann durch die Auswertung der Sensorsignale und die zugehörige Ermittlung der Eigenfrequenzen unter anderem die Schwingungsfrequenz des Pendel und damit die wirksame Pendellänge ermittelt werden. Dies kann insbesondere dann sinnvoll sein, wenn allmählich bestimmte Teile der Pendelmasse verbraucht werden oder anderweitig verlustig gehen und sich aufgrund dieses Sachverhalts die Lage des Schwerpunkts der Pendelmasse und damit die wirksame Pendellänge ändert.

Die Hauptanwendung der vorliegenden Erfindung besteht jedoch darin, dass die Einrichtung relativ zu einem ortsfesten Bezugssystem mittels einer Federung federnd gehalten ist, dass mindestens eines der Signale für einen Weg oder eine zeitliche Ableitung des Weges der Einrichtung in einer im wesentlichen vertikal verlaufenden ersten Richtung am Ort des entsprechenden Sensors charakteristisch ist und dass die Auswertungseinrichtung als Eigenschaft der Einrichtung eine Masse der Einrichtung oder eine von der Masse der Einrichtung abhängige Eigenschaft der Einrichtung oder eine Federcharakteristik der Federung ermittelt. Dieser Fall liegt insbesondere vor, wenn bei Fahrzeugen - insbesondere Straßenfahrzeugen - die Masse des Fahrzeugs erfasst werden soll. Im Sinne der vorliegenden Erfindung ist auch ein Anhänger, beispielsweise ein PKW-Anhänger, ein Straßenfahrzeug.

In vielen Fällen ist es von Vorteil, dass ein weiteres der Signale der Sensoren für einen Weg oder eine zeitliche Ableitung des Weges der Einrichtung in einer im wesentlichen orthogonal zur ersten Richtung verlaufenden zweiten Richtung am Ort des entsprechenden Sensors charakteristisch ist, so dass im Ergebnis der Weg oder dessen zeitliche Ableitung als Vektor zur Verfügung steht. Die zweite Richtung ist, sofern möglich, vorzugsweise derart bestimmt, dass sie (zumindest im wesentlichen) parallel zu einer erkennbaren Vorzugsrichtung der Einrichtung verläuft, beispielsweise bei einem Fahrzeug in Richtung der Längsachse des Fahrzeugs.

Oftmals stehen sogar der Weg oder dessen zeitliche Ableitung für mehrere zur ersten Richtung zumindest im wesentlichen orthogonale zweite Richtungen zur Verfügung, so dass im Ergebnis der Weg bzw. dessen zeitliche Ableitung als Vektor im dreidimensionalen Raum zur Verfügung steht. Die zweiten Richtungen sind vorzugsweise zumindest im wesentlichen orthogonal zueinander. Sie können aber auch einen anderen Winkel bilden, solange sie linear unabhängig voneinander sind.

Soweit bisher erläutert, können die Signale nach Bedarf der Weg, die Geschwindigkeit (= die erste zeitliche Ableitung des Weges) oder die Beschleunigung (= die zweite zeitliche Ableitung des Weges) sein. In der Regel sind die Signale jedoch Beschleunigungssignale. In derartigen Fällen sind weitergehende Auswertungen möglich.

Beispielsweise kann die Auswertungseinrichtung in diesem Fall anhand der von der Auswertungseinrichtung von den Sensoren entgegengenommenen Signale einen Neigungswinkel der Einrichtung innerhalb einer von der ersten Richtung und einer der zweiten Richtungen aufgespannten Ebene ermitteln. Diese Ausgestaltung führt in manchen Fällen zu verbesserten Ergebnissen bei der Ermittlung der Eigenschaft der Einrichtung.

Beispielsweise kann die Auswertungseinrichtung für die von verschiedenen Beschleunigungssensoren ermittelten Werte a0 (= Offset der jeweiligen Schwingung) verwerten und daraus den Neigungswinkel ermitteln. In diesem Fall kann für die Ermittlung des Neigungswinkels derselbe Signalverlauf verwertet werden, der auch für die Ermittlung der Eigenfrequenz verwendet wird. Alternativ ist es möglich, dass die Auswertungseinrichtung die Signale, anhand derer sie den Neigungswinkel ermittelt, in einem schwingungsfreien Zustand der Einrichtung entgegennimmt, so dass die Signale quasi statisch sind.

Insbesondere ist es möglich, dass die - beispielsweise basierend auf der Auswertung des zeitlichen Verlaufs der Beschleunigung in der ersten Richtung - ermittelte Eigenschaft der Einrichtung eine Teilmasse der Einrichtung ist, mit der die Einrichtung über einen ersten Koppelbereich, an dem die Einrichtung relativ zu dem ortsfesten Bezugssystem federnd gehalten ist, auf das ortsfeste Bezugssystem einwirkt. Wenn in einem derartigen Fall die Einrichtung über einen zweiten Koppelbereich relativ zu dem ortsfesten Bezugssystem federnd gehalten ist, liegt eine Verbindungslinie des ersten Koppelbereichs und des zweiten Koppelbereichs vorzugsweise in der von der ersten und der entsprechenden zweiten Richtung aufgespannten Ebene. Die Sensoren sind also so angeordnet und orientiert, dass die zweite Richtung mit der durch die Verbindungslinie definierten Richtung zumindest im wesentlichen übereinstimmt. In einem derartigen Fall kann die Auswertungseinrichtung unter Verwertung der ermittelten Teilmasse und des ermittelten Neigungswinkels die Masse der Einrichtung ermitteln. Dies kann insbesondere dann von Vorteil sein, wenn eine Eigenfrequenz des zweiten Koppelbereichs durch eine Eigenfrequenz des ersten Koppelbereichs verdeckt oder überlagert ist.

Die Aufgabe wird weiterhin durch ein Computerprogramm mit den Merkmalen des Anspruchs 13 gelöst. Erfindungsgemäß bewirkt die Abarbeitung des Computerprogramms durch die Auswertungseinrichtung, dass die Auswertungseinrichtung ein erfindungsgemäßes Auswertungsverfahren ausführt.

Die Aufgabe wird weiterhin durch eine Auswertungseinrichtung mit den Merkmalen des Anspruchs 14 gelöst. Erfindungsgemäß ist eine Auswertungseinrichtung der eingangs genannten Art mit einem erfindungsgemäßen Computerprogramm programmiert, so dass die Auswertungseinrichtung im Betrieb ein erfindungsgemäßes Auswertungsverfahren Ansprüche ausführt.

Die Aufgabe wird weiterhin durch ein System mit den Merkmalen des Anspruchs 15 gelöst. Erfindungsgemäß ist bei einem System der eingangs genannten Art die Auswertungseinrichtung des Systems als erfindungsgemäße Auswertungseinrichtung ausgebildet.

Weitere Vorteile und Einzelheiten ergeben sich aus der nachfolgenden Beschreibung von Ausführungsbeispielen in Verbindung mit den Zeichnungen. Es zeigen in schematischer Prinzipdarstellung:

FIG 1      ein System mit einer Einrichtung, Sensoren und einer Auswertungseinrichtung,
FIG 2      ein Ablaufdiagramm,
FIG 3      ein Zeitdiagramm,
FIG 4      ein Ablaufdiagramm,
FIG 5      ein Frequenzdiagramm,
FIG 6      ein Ablaufdiagramm,
FIG 7      ein Frequenzdiagramm,
FIG 8      ein Ablaufdiagramm,
FIG 9      eine Einrichtung und ein Bezugssystem von der Seite,
FIG 10     die Einrichtung von FIG 9 von oben,
FIG 11     eine weitere Einrichtung und ein Bezugssystem von der Seite und
FIG 12     ein Ablaufdiagramm.

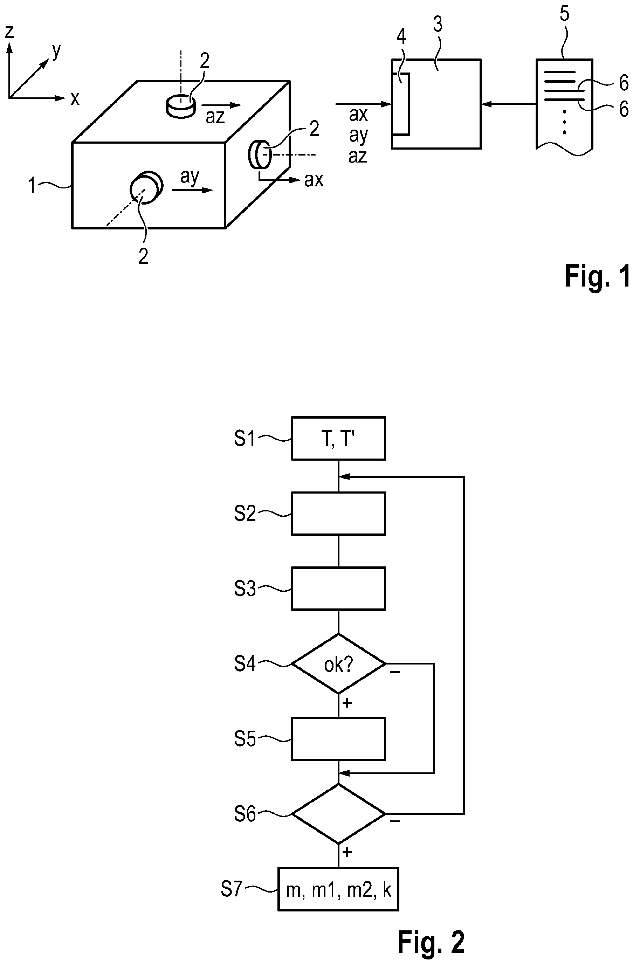

Gemäß FIG 1 weist ein System eine Einrichtung 1 auf. Die Einrichtung 1 kann im allgemeinen Fall nahezu beliebiger Natur sein. In vielen Fällen wird es sich jedoch - dies wird aus späteren Beispielen noch ersichtlich werden - um eine Last handeln, die über eine Anzahl von Koppelbereichen relativ zu einem ortsfesten Bezugssystem federnd gehalten ist. Im allgemeinen Fall ist es lediglich erforderlich, dass die Einrichtung 1 überhaupt schwingen kann. Dies ist beispielsweise sogar bei einer eigentlich ortsfest angeordneten Einrichtung 1 wie beispielsweise einem Gebäude oder einem anderen Bauwerk (beispielsweise einer Brücke) oder einem natürlichen Untergrund der Fall, sogar bei einer tektonischen Platte.

Das System weist weiterhin eine Anzahl von Sensoren 2 auf, die mit der Einrichtung 1 verbunden sind. Die Sensoren 2 erfassen, wie in FIG 1 gestrichelt angedeutet, entweder jeweils einen Weg, der von der Einrichtung 1 in einer durch die Orientierung des jeweiligen Sensors 2 definierten Richtung, beispielsweise den Richtungen x, y, z zurückgelegt wird, oder eine zeitliche Ableitung eines derartigen Weges, beispielsweise die zugehörige Geschwindigkeit oder die zugehörige Beschleunigung. Sie geben ein jeweiliges Signal ax, ay, az aus, das für die von ihnen erfasste jeweilige Größe (Weg, Geschwindigkeit, Beschleunigung) charakteristisch ist. In der Regel werden die Beschleunigungen erfasst.

Die Richtungen x, y, z, in denen die Größen erfasst werden, sind in aller Regel bezüglich der Einrichtung 1 ortsfest und weiterhin paarweise orthogonal zueinander. In vielen Fällen sind die Richtungen x und y zumindest im wesentlichen horizontal orientiert, während die Richtung z zumindest im wesentlichen vertikal orientiert ist. Die Bezeichnungen werden nachfolgend aber auch dann beibehalten, wenn die von den Sensoren 2 zur Verfügung gestellten Signale ax, ay, az nicht orthogonal zueinander orientiert sind oder wegen leichter Verdrehungen nicht horizontal bzw. vertikal orientiert sind oder sich die Orientierungen geringfügig ändern.

Die Sensoren 2 sind in FIG 1 als voneinander verschiedene Elemente dargestellt. Oftmals werden jedoch Einheiten eingesetzt, welche stets drei zueinander orthogonale Größen erfassen und entsprechende Signale ax, ay, az ausgeben. Bei entsprechender Orientierung dieser Einheit, die in der Praxis normalerweise vorgenommen wird, korrespondieren die von einer derartigen Einheit zur Verfügung gestellten Signale - jedenfalls im wesentlichen - mit den Größen in den beiden Horizontalrichtungen x, y und der Vertikalrichtung z.

Das System weist weiterhin eine Auswertungseinrichtung 3 auf. Die Auswertungseinrichtung 3 weist ihrerseits eine Schnittstelle 4 auf, über welche die Auswertungseinrichtung 3 zum Entgegennehmen der Signale ax, ay, az mit den Sensoren 2 datentechnisch verbunden werden kann. Die Schnittstelle 4 kann für eine leitungsgebundene Verbindung mit den Sensoren 2 ausgelegt sein. Alternativ kann die Schnittstelle 4 für eine leitungslose Verbindung zu den Sensoren 2 ausgelegt sein, beispielsweise als Funkschnittstelle oder als Bluetoothschnittstelle ausgebildet sein. Entscheidend ist, dass die Schnittstelle 4 bereits fertig vorbereitet ist, dass also nur noch die Sensoren 2 datentechnisch verbunden werden müssen.

Die Auswertungseinrichtung 3 ist in der Regel als softwareprogrammierbare Einrichtung ausgebildet und daher mit einem Computerprogramm 5 programmiert. Das Computerprogramm 5 umfasst Maschinencode 6, der von der Auswertungseinrichtung 3 abarbeitbar ist. Die Abarbeitung des Maschinencodes 6 durch die Auswertungseinrichtung 3 bewirkt, dass die Auswertungseinrichtung 3 ein Auswertungsverfahren ausführt.

Im übrigen kann die Auswertungseinrichtung 3 nach Bedarf ausgebildet sein. Es kann sich - beispielsweise - um eine eigenständige Einrichtung handeln, die fest oder über ein Kabel mit der Einrichtung 1 verbunden ist. Es ist sogar möglich, dass ein einheitliches Gerät vorhanden ist, das die Sensoren 2 und die Auswertungseinrichtung 3 enthält. In diesem Fall kann das Gerät als Einheit mit der Einrichtung 1 verbunden werden. Es kann sich bei der Auswertungseinrichtung 3 aber auch um ein anderes Gerät handeln, insbesondere um ein anderweitig allgemein verbreitetes Gerät, beispielsweise ein Mobiltelefon (insbesondere ein Smartphone), auf dem als Computerprogramm 5 eine entsprechende App installiert ist.

Das Auswertungsverfahren wird nachstehend in Verbindung mit FIG 2 näher erläutert.

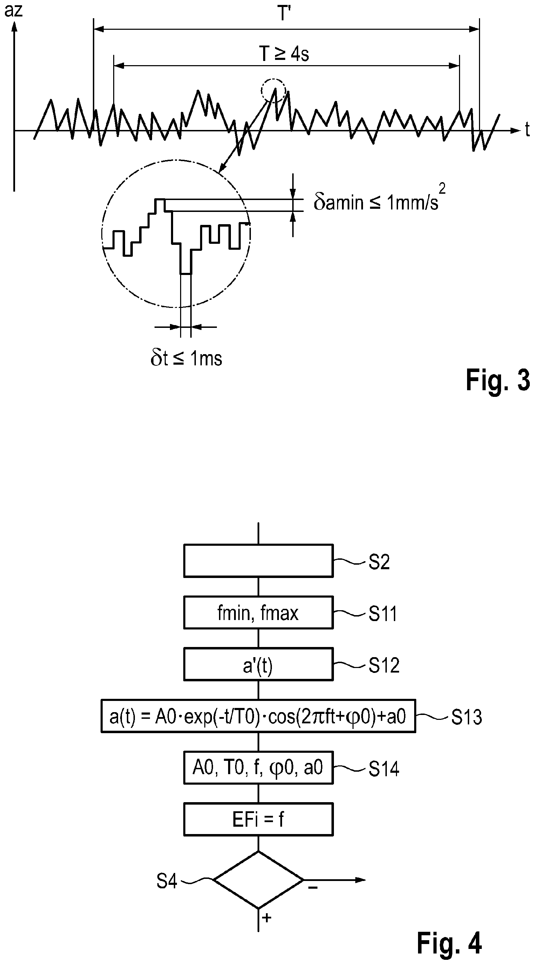

In manchen Fällen werden die Signale ax, ay, az von der Auswertungseinrichtung 3 ständig erfasst und gespeichert. In diesem Fall ist die zugehörige Speichereinrichtung nach Art eines Ringpuffers ausgebildet, so dass stets die ältesten gespeicherten Werte überschrieben werden. In diesem Fall stehen der Auswertungseinrichtung 3 die Signale ax, ay, az ab dem jeweils aktuellen Zeitpunkt zurück bis zu einem Zeitpunkt in der Vergangenheit zur Verfügung, wobei der in der Vergangenheit liegende Zeitpunkt durch die Größe des Ringpuffers bestimmt ist. In anderen Fällen werden die Signale ax, ay, az von der Auswertungseinrichtung 3 nur während eines Erfassungszeitraum T' (siehe FIG 3) erfasst und gespeichert.

Unabhängig davon, ob die eine oder die andere Vorgehensweise ergriffen wird, stehen der Auswertungseinrichtung 3 jedoch die Signale ax, ay, az zumindest für den Erfassungszeitraum T' zur Verfügung, so dass die insgesamt gespeicherten Signale ax, ay, az einen jeweiligen zeitlichen Verlauf ax(t), ay(t) und az(t) des jeweiligen Signals ax, ay, az bilden.

Die Erfassung und Speicherung der Signale ax, ay, az kann auf bekannte Art und Weise erfolgen. Sie wird daher nachstehend nicht näher erläutert. Nachstehend wird vielmehr lediglich die Auswertung der Signale ax, ay, az als solche näher erläutert.

Gemäß FIG 2 bestimmt die Auswertungseinrichtung 3 - soweit er nicht bereits feststeht - in einem Schritt S1 den Erfassungszeitraum T' und innerhalb des Erfassungszeitraums T' einen Auswertungszeitraum T (siehe FIG 3).

Je nach Lage des Einzelfalls sind verschiedene Möglichkeiten für die Bestimmung des Erfassungszeitraums T' und des Auswertungszeitraums T gegeben. So ist es beispielsweise möglich, dass bei kontinuierlicher Erfassung und Speicherung der Signale ax, ay, az die Auswertungseinrichtung 3 den Beginn des Auswertungszeitraums T auf einen Zeitpunkt legt, zu dem eine Amplitude eines der Signale ax, ay, az einen oberen Schwellenwert überschreitet. In analoger Weise ist es möglich, dass die Auswertungseinrichtung 3 das Ende des Auswertungszeitraums T auf einen Zeitpunkt legt, zu dem eine Amplitude eines der Signale ax, ay, az einen unteren Schwellenwert unterschreitet. Auch ist es möglich, dass die Auswertungseinrichtung 3 von einer Bedienperson Befehle entgegennimmt, die den Anfang und/oder das Ende des Auswertungszeitraums T festlegen. Auch andere Vorgehensweisen sind möglich. Der Auswertungszeitraum T ist maximal so groß wie der Erfassungszeitraum T'. Er kann auch kleiner sein. Weiterhin kann je nach Lage des Einzelfalls der Erfassungszeitraum T' durch Eigenschaften der Einrichtung 1 bestimmt sein oder frei gewählt werden.

Je nach Lage des Einzelfalls In vielen Fällen kann auch der Auswertungszeitraum T durch Eigenschaften der Einrichtung 1 bestimmt sein oder frei gewählt werden. In vielen Fällen liegt der Auswertungszeitraum T gemäß FIG 3 vorzugsweise bei mindestens 4 Sekunden, beispielsweise bei 5 Sekunden, 6 Sekunden, 8 Sekunden oder 10 Sekunden. Der Auswertungszeitraum T kann - je nach Lage des Einzelfalls - auch kleiner sein. Ein Minimalwert von 0,5 Sekunden sollte jedoch in manchen Fällen, insbesondere bei einer Anwendung im Fahrzeugbereich, nicht unterschritten werden. Der zeitliche Abstand $\delta t$ zwischen zwei einzelnen Erfassungsvorgängen hingegen liegt vorzugsweise bei maximal 1 ms. Er kann auch bei einem kleineren Wert wie beispielsweise 625 $\mu$s oder 500 $\mu$s liegen. Wenn die Sensoren 2 Beschleunigungssensoren sind, liegt die Erfassungsgenauigkeit $\delta$amin, mit welcher die Beschleunigungen von den Sensoren 2 erfasst und an die Auswertungseinrichtung 3 übermittelt werden, vorzugsweise bei 1 mm/s$^2$ oder besser, beispielsweise bei 0,8 mm/s$^2$, 0,6 mm/s$^2$ oder 0,5 mm/s$^2$.

Wenn der Auswertungszeitraum T beendet ist, selektiert die Auswertungseinrichtung 3 in einem Schritt S2 für eines der Signale ax, ay, az den zugehörigen Signalverlauf ax(t), ay(t), az(t). In einem Schritt S3 wertet die Auswertungseinrichtung den selektierten Signalverlauf ax(t), ay(t), az(t) aus und ermittelt so eine Eigenfrequenz EFi der Einrichtung 1. Der Index i steht hierbei für den jeweils ausgewerteten Signalverlauf ax(t), ay(t), az(t). Der Schritt S3 wird später in Verbindung mit FIG 4 näher erläutert werden.

In einem Schritt S4 prüft die Auswertungseinrichtung 3, ob das im Schritt S3 ermittelte Auswertungsergebnis sinnvoll ist. Nur wenn dies der Fall ist, speichert die Auswertungseinrichtung 3 in einem Schritt S5 das ermittelte Auswertungsergebnisse ab. Im Rahmen der Prüfung des Schrittes S4 können beispielsweise statistische Auswertungen vorgenommen werden und geprüft werden, ob die Standardabweichung oder die maximale Abweichung innerhalb bestimmter Grenzen liegen.

In einem Schritt S6 prüft die Auswertungseinrichtung 3, ob die Auswertung der Signalverläufe ax(t), ay(t), az(t) abgeschlossen ist. Je nach Einzelfall kann dies bedeuten, dass nur einer oder einige der Signalverläufe ax(t), ay(t), az(t) den Schritten S2 bis S5 unterzogen werden. In vielen Fällen werden die Schritte S2 bis S5 jedoch für alle Signalverläufe ax(t), ay(t), az(t) ausgeführt. In aller Regel wird jedoch zumindest der Signalverlauf az(t) ausgewertet, also die Vertikalkomponente des zurückgelegten Weges bzw. von dessen erster oder zweiter zeitlicher Ableitung. Weiterhin können die Signalverläufe ax(t), ay(t) und az(t) auch mehrfach ausgewertet werden. Dies wird aus den Erläuterungen zu FIG 4 ersichtlich werden. Bei jeder Auswertung wird eine jeweilige Eigenfrequenz EFi der Einrichtung 1 ermittelt.

Je nach Ergebnis der Prüfung geht die Auswertungseinrichtung 3 zum Schritt S2 zurück und selektiert dort einen anderen, bisher noch nicht ausgewerteten Signalverlauf ax(t), ay(t), az(t) oder ermittelt für einen bereits teilweise ausgewerteten Signalverlauf ax(t), ay(t), az(t) eine weitere Eigenfrequenz EFi. Wenn die Auswertungseinrichtung 3 nicht zum Schritt S2 zurückgeht, geht sie zu einem Schritt S7 über. Im Schritt S7 ermittelt die Auswertungseinrichtung 3 eine Eigenschaft der Einrichtung 1. Sie verwertet im Rahmen dieser Ermittlung die ermittelten Eigenfrequenzen EFi.

In einfach gelagerten Fällen kann es ausreichend sein, nur einen einzelnen Signalverlauf ax(t), ay(t), az(t) auszuwerten und/oder für einen einzelnen Signalverlauf ax(t), ay(t), az(t) nur eine einzige Eigenfrequenz EFi zu ermitteln. In vielen Fällen kann es jedoch erforderlich sein, dass die Auswertungseinrichtung 3 für die Signale ax, ay, az mehrerer Sensoren 2 (genauer: für die entsprechenden Signalverläufe) jeweils mindestens eine Eigenfrequenz EFi der Einrichtung 1 ermittelt. Die jeweilige Eigenfrequenz EFi ist jedoch nur vorläufig. In diesem Fall kann die Auswertungseinrichtung 3 später als Eigenfrequenz EFi der Einrichtung 1 mindestens eine der vorläufigen Eigenfrequenzen EFi festlegen, die übereinstimmend bei den Signalen ax, ay, az mehrerer der Sensoren 2 ermittelt wurde. Ebenso ist es möglich, dass die Auswertungseinrichtung 3 für die Signale ax, ay, az mehrerer Sensoren 2 jeweils mindestens eine Eigenfrequenz EFi der Einrichtung 1 ermittelt, hierauf aufbauend vorläufig eine Eigenschaft der Einrichtung 1 ermittelt und als Eigenschaft der Einrichtung 1 einen Wert übernimmt, der für mehrere der Sensoren 2 ermittelt wurde.

Nachfolgend wird in Verbindung mit FIG 4 der Schritt S3 von FIG 2 erläutert. Im Rahmen der Erläuterung von FIG 4 wird angenommen, dass der selektierte Signalverlauf ax(t), ay(t), az(t) der Signalverlauf az(t) ist. Für die anderen Signalverläufe ax(t), ay(t) sind jedoch analoge Ausführungen gültig.

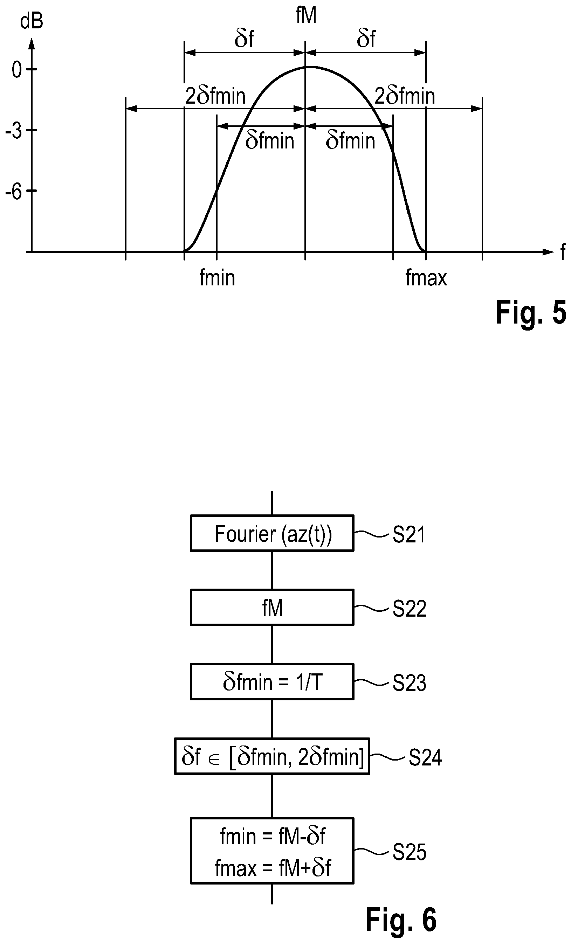

Gemäß FIG 4 werden zunächst in einem Schritt S11 eine untere Grenzfrequenz fmin und eine obere Grenzfrequenz fmax festgelegt. In einem Schritt S12 unterzieht die Auswertungseinrichtung 3 sodann den Signalverlauf az(t) einer Filterung. Die Filterung des Schrittes S12 ist eine Bandpassfilterung. Die Bandpassfilterung ist gemäß FIG 5 im wesentlichen nur für Frequenzen f zwischen der unteren Grenzfrequenz fmin und der oberen Grenzfrequenz fmax durchlässig. Die Auswertungseinrichtung 3 ermittelt so einen gefilterten Signalverlauf a'(t), der im wesentlichen nur die Anteile mit Frequenzen f zwischen der minimalen Frequenz fmin und der maximalen Frequenz fmax umfasst. In aller Regel ist die Bandpassfilterung zugleich auch eine Nullphasenfilterung.

In einem Schritt S13 setzt die Auswertungseinrichtung 3 eine parametrierte Form einer gedämpften harmonischen Schwingung an. Typischerweise weist die gedämpfte harmonische Schwingung die Form

$$a(t) = A0 \cdot \exp(-t/T0) \cdot \cos(2\pi ft + \varphi 0) + a0 \qquad (1)$$

auf. In Gleichung 1 kommen die Parameter A0, T0, f, $\varphi$0 und a0 vor. Die Parameter A0, T0, f, $\varphi$0 und a0 haben - stets bezogen auf die gedämpfte harmonische Schwingung - folgende Bedeutung:

- A0 ist eine Anfangsamplitude,
- T0 ist eine Zeitkonstante einer Dämpfung,
- f ist die Frequenz,
- $\varphi$0 ist ein Phasenversatz und
- a0 ist ein Offset.

Der Offset a0 kann insbesondere relevant sein, wenn der jeweilige Sensor 2 ein Beschleunigungssensor ist, der auch auf die Erdbeschleunigung reagiert, was oftmals der Fall ist. a ist die jeweilige Elongation der gedämpften harmonischen Schwingung als Funktion der Zeit t.

In einem Schritt S14 ermittelt die Auswertungseinrichtung 3 mittels einer Regression des gefilterten Signalverlaufs a'(t) die Parameter A0, T0, f, φ0 und a0 und damit insbesondere auch die Frequenz f der gedämpften harmonischen Schwingung. Die Ermittlung der Parameter A0, T0, f, φ0 und a0 erfolgt derart, dass die durch die Parameter A0, T0, f, φ0 und a0 festgelegte gedämpfte harmonische Schwingung gemäß einem Optimierungskriterium so gut wie möglich mit dem gefilterten Signalverlauf a'(t) übereinstimmt. Die Optimierung kann insbesondere nach der Methode der Minimierung der quadratischen Abweichungen vorgenommen werden.

Zu Beginn der Ausführung des Schrittes S14 wird die gedämpfte harmonische Schwingung mit Anfangswerten für die Parameter A0, T0, f, φ0 und a0 initialisiert. Derartige Initialisierungen sind üblich und Fachleuten allgemein bekannt. Gegebenenfalls kann im Schritt S14 auch ein möglicher Parameterraum für die Parameter A0, T0, f, φ0 und a0 festgelegt werden.

In einem Schritt S15 legt die Auswertungseinrichtung 3 die im Schritt S14 ermittelte Frequenz f als eine Eigenfrequenz EFi der Einrichtung 1 fest.

Der guten Ordnung halber sei darauf hingewiesen, dass die Schritte S11 bis S15 individuell für den jeweiligen ausgewerteten Signalverlauf ax(t), ay(t), az(t) durchgeführt werden. Die für die Signalverläufe ax(t), ay(t), az(t) ermittelten Eigenfrequenzen EFi können also voneinander verschiedene Werte aufweisen. Aus den Schritten S11 bis S15 ist auch ersichtlich, dass für ein und denselben Signalverlauf ax(t), ay(t), az(t) auch mehrere Eigenfrequenzen EFi ermittelt werden können. Es ist lediglich erforderlich, im Schritt S11 die untere Grenzfrequenz fmin und/oder die obere Grenzfrequenz fmax anders festzulegen.

Die Ermittlung der unteren Grenzfrequenz fmin und der oberen Grenzfrequenz fmax (Schritt S11 von FIG 4) erfolgt - stellvertretend wieder für den Signalverlauf az(t) erläutert - entsprechend der Darstellung in FIG 6 vorzugsweise wie folgt:

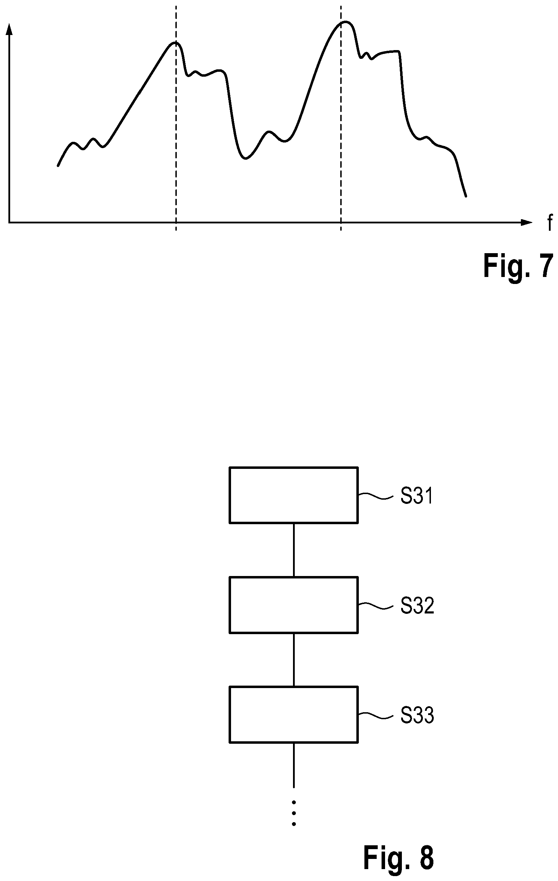

Zunächst ermittelt die Auswertungseinrichtung 3 in einem Schritt S21 mittels einer Frequenzanalyse des Signalverlaufs az(t) - beispielsweise einer Fouriertransformation - ein zugehöriges Spektrum. Ein mögliches derartiges Spektrum ist rein beispielhaft in FIG 7 dargestellt. Sodann werden, basierend auf dem ermittelten Spektrum und dem Auswertungszeitraum T, in nachfolgenden Schritten S22 bis S25 die untere Grenzfrequenz fmin und die obere Grenzfrequenz fmax ermittelt. Die Ermittlung der Grenzfrequenzen fmin und fmax kann alternativ durch die Auswertungseinrichtung 3 oder durch eine Bedienperson der Auswertungseinrichtung 3 erfolgen. Im letzteren Fall kann durch die Auswertungseinrichtung 3 gegebenenfalls eine Führung der Bedienperson durch einen entsprechenden Workflow erfolgen.

Vorzugsweise wird zunächst im Schritt S22 eine Frequenz f, bei der das Spektrum einen Maximalwert aufweist, als eine mittlere Frequenz fM bestimmt. In FIG 7 sind durch vertikale gestrichelte Linien zwei mögliche Frequenzen f angedeutet, die als mittlere Frequenz fM in Frage kommen.

Weiterhin wird im Schritt S23 anhand des Auswertungszeitraums T ein Mindestabstand δfmin bestimmt. In der Regel ist der Mindestabstand δfmin durch die Beziehung

$$\delta f\min = 1/T \qquad\qquad (2)$$

bestimmt. Aufbauend auf dem Mindestabstand δfmin wird sodann im Schritt S24 ein tatsächlicher Abstand δf festgelegt. Der tatsächliche Abstand δf ist - siehe auch FIG 5 - keinesfalls kleiner als der Mindestabstand δfmin. In der Regel ist er maximal doppelt so groß wie der Mindestabstand δfmin.

Im Schritt S25 werden sodann die untere Grenzfrequenz fmin und die obere Grenzfrequenz fmax ermittelt. Insbesondere wird zum Ermitteln der unteren Grenzfrequenz fmin der tatsächliche Abstand δf von der mittleren Frequenz fM subtrahiert und zum Ermitteln der oberen Grenzfrequenz fmax der tatsächliche Abstand δf zu der mittleren Frequenz fM addiert. Gegebenenfalls kann der tatsächliche Abstand δf für die untere Grenzfrequenz fmin unabhängig von dem tatsächlichen Abstand δf für die obere Grenzfrequenz fmax ermittelt werden. Dies ändert jedoch nichts an den vorstehend erläuterten Prinzipien.

In manchen Fällen kann es erforderlich sein, die Einrichtung 1 vor dem Beginn des Auswertungszeitraums T durch eine externe Anregung (beispielsweise einen kleinen Schlag) zu einer Schwingung anzuregen. In diesem Fall ist der Beginn des Auswertungszeitraums T durch das Detektieren der Anregung festgelegt, das Ende beispielsweise vorbestimmt oder durch Unterschreiten der Amplitude der angeregten Schwingung bestimmt. Der Erfassungszeitraum T' kann z.B. zusätzlich eine gewisse Zeitspanne vor und/oder nach dem Auswertungszeitraum T mit umfassen. Im Falle der externen Anregung kann beispielsweise entsprechend der Darstellung in FIG 8 zunächst in einem Schritt S31 die Ausführung des eigentlichen Auswertungsverfahrens, wie es vorstehend erläutert wurde, vorbereitet werden, die Auswertungseinrichtung 3 sozusagen scharf gemacht werden. Im Schritt S32 erfolgt die Erkennung der externen Anregung. Dieser Zeitpunkt bestimmt den Beginn des Auswertungszeitraums T. Die externe Anregung ist sozusagen der Startschuss für den Auswertungszeitraum T. Mit der Anregung kann beispielsweise die Erfassung der Signale ax, ay, az in einem Schritt S33 beginnen. Während der weiteren Signalerfassung, also während des Auswertungszeitraums T, erfolgt hingegen vorzugsweise keine externe Anregung der Einrichtung 1.

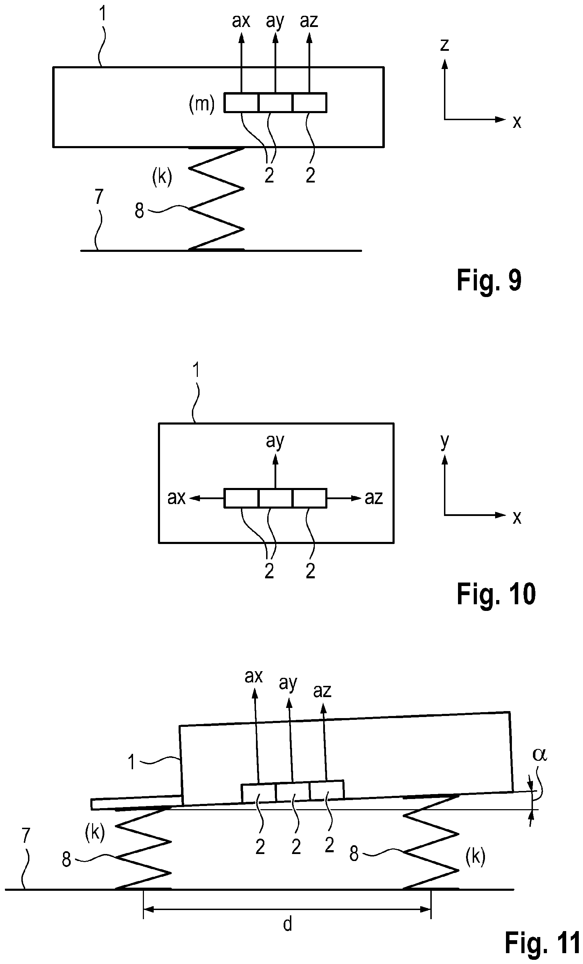

FIG 9 und 10 zeigen eine mögliche konkrete Anwendung der vorliegenden Erfindung. Gemäß den FIG 9 und 10 ist die Einrichtung 1 relativ zu einem ortsfesten Bezugssystem 7 mittels einer Federung 8 federnd gehalten. Die Einrichtung 1 weist eine Masse m auf, die Federung 8 eine Federcharakteristik, im einfachsten Fall beispielsweise eine Federkonstante k. Oftmals ist - sei es als eigenständiges Element, sei es als integraler Bestandteil der Federung 8 - auch eine Dämpfung vorhanden. Mindestens eines der Signale ax, ay, az der Sensoren 2 - hier das Signal az - ist für eine Größe (Weg, Geschwindigkeit, Beschleunigung) der Einrichtung 1 am Ort des entsprechenden Sensors 2 (im wesentlichen) in Vertikalrichtung charakteristisch.

Im Falle der Ausgestaltung gemäß den FIG 9 und 10 gilt für das Signal az (also im wesentlichen für die Vertikalkomponente) für den Fall einer ungedämpften harmonischen Schwingung und mit guter Ernährung auch für den Fall einer schwach gedämpften harmonischen Schwingung die Beziehung

$$2\pi f = \sqrt{k/m} \,, \qquad\qquad\qquad (3)$$

wobei f die Schwingungsfrequenz (= Eigenfrequenz der Einrichtung 1), k die Federkonstante der Federung 8 und m die Masse der Einrichtung 1 sind. Im allgemeinen Fall ergibt sich die Schwingungsfrequenz f als Funktion der Federcharakteristik und der Masse m. Nachfolgend wird jedoch angenommen, dass die Federcharakteristik durch die Federkonstante k bestimmt ist.

Die Frequenz f wird im Schritt S14 von FIG 4 ermittelt. Wenn die Federkonstante k der Federung 8 bekannt ist, kann somit anhand der im Schritt S14 ermittelten Frequenz f als Eigenschaft der Einrichtung 1 die Masse m der Einrichtung 1 ermittelt werden. Wenn umgekehrt die Masse m der Einrichtung 1 bekannt ist, kann als Eigenschaft der Einrichtung 1 die Federkonstante k der Federung 8 ermittelt werden.

In der Praxis können oftmals beide Größen k, m ermittelt werden. Beispielsweise kann im Rahmen einer Kalibrierung oftmals eine definierte und damit bekannte Masse m eingestellt und dann durch Ermittlung der Frequenz f die Federkonstante k (allgemein: die Federcharakteristik) hergeleitet werden. Diese Kalibrierung wird nur von Zeit zu Zeit ausgeführt, beispielsweise einmal im Monat oder in anderen, regelmäßigen oder unregelmäßigen größeren zeitlichen Abständen. Im Rahmen einer normalen Messung kann die durch Kalibrierung ermittelte Federcharakteristik als bekannt vorausgesetzt und beispielsweise anhand von Gleichung 3 aus der Frequenz f die Masse m der Einrichtung 1 hergeleitet werden.

Es ist sogar möglich, ohne Kenntnis der Federcharakteristik und ohne Kenntnis der Masse m beide Größen zu ermitteln. Auch dies wird nachstehend für den Fall erläutert, dass die Federcharakteristik eine Federkonstante k ist. In diesem Fall müssen zwei Messungen durchgeführt werden, wobei zwischen den beiden Messungen die (unbekannte) Masse m um eine bekannte Massenänderung geändert wird. Aus den beiden sich ergebenden Schwingungsfrequenzen f kann in Verbindung mit der bekannten Massenänderung die Federkonstante k ermittelt werden. Mit der nunmehr bekannten Federkonstante k auch sodann die Masse m ermittelt werden.

Oftmals ist die Einrichtung 1 entsprechend der Darstellung in FIG 11 die Einrichtung 1 sowohl an einem ersten Koppelbereich 9 als auch an einem zweiten Koppelbereich 10 relativ zu dem ortsfesten Bezugssystem 7 federnd gehalten. Die zugehörigen Federungen 8 können jeweils eine eigene Federkonstante k (allgemein: Federcharakteristik) aufweisen. Die Einrichtung 1 wirkt über beide Koppelbereiche 9, 10 mit einem jeweiligen Anteil ihrer Gewichtskraft auf das ortsfeste Bezugssystem 7 ein. Ein derartiger Fall liegt beispielsweise bei einem Straßenfahrzeug vor, bei welchem die Aufhängung an der Hinterachse des angetriebenen Straßenfahrzeugs (PKW, LKW, Omnibus) mit dem ersten Koppelbereich 9 und die Aufhängung an der Vorderachse des Straßenfahrzeugs mit dem zweiten Koppelbereich 10 korrespondiert. Ein derartiger Fall liegt auch bei einem PKW-Anhänger vor, bei welchem die Aufhängung an der (in der Regel einzigen) Achse des Anhängers mit dem ersten Koppelbereich 9 und die Aufhängung an der Hinterachse des Zugfahrzeugs mit dem zweiten Koppelbereich 10 korrespondiert.

Im Falle der Kopplung der Einrichtung 1 über zwei Koppelbereiche 9, 10 kann, sofern die Federcharakteristika bzw. Federkonstanten k für die beiden Koppelbereiche 9, 10 bekannt sind, durch die Ermittlung von zwei verschiedenen Eigenfrequenzen EFi für den Signalverlauf az(t) sowohl eine über den ersten Koppelbereich 9 auf das Bezugssystem 7 einwirkende Teilmasse m1 der Einrichtung 1 als auch eine über den zweiten Koppelbereich 10 auf das Bezugssystem 7 einwirkende Teilmasse m2 der Einrichtung 1 ermittelt werden. Die Masse m der Einrichtung 1 ergibt sich als Summe der beiden Teilmassen m1, m2. In diesem Fall ermittelt die Auswertungseinrichtung 3 als Eigenschaften der Einrichtung 1 zwei von der Masse m der Einrichtung 1 abhängige Eigenschaften der Einrichtung 1, nämlich die Teilmassen m1, m2. Diese Ermittlung ist insbesondere dann möglich, wenn die Eigenfrequenz EFi für die beiden Koppelbereiche 9, 10 sich hinreichend unterscheiden. Gegebenenfalls kann es zusätzlich erforderlich sein, dass die größere dieser beiden Eigenfrequenzen EFi sich auch hinreichend von einem ganzzahligen Vielfachen der niedrigeren dieser beiden Eigenfrequenzen EFi unterscheidet.

Ähnliche Auswertungen sind auch möglich, wenn die Federcharakteristiken keine einfachen Konstanten sind. Weiterhin kann es, so wie vorstehend für den allgemeinen Fall ausgeführt, erforderlich sein, mehrere der Größen ax, ay, az auszuwerten und deren Ergebnisse zusammenzuführen bzw. in einer Gesamtschau zu betrachten.

Im Falle eines (in der Regel einachsigen) PKW-Anhängers ist die Teilmasse m1 die Achs- bzw. Radlast des PKW-Anhängers. Die Teilmasse m2 enthält zwei Anteile, nämlich zum einen den Anteil der Masse des Zugfahrzeugs, der über die Hinterachse des Zugfahrzeugs auf den Boden (= das ortsfeste Bezugssystem 7) übertragen wird, und zum anderen die Stützlast des PKW-Anhängers. Übliche PKW sind jedoch derart ausgelegt, dass die Masse des Zugfahrzeugs/PKW zumindest in etwa gleichmäßig auf die Vorderachse und die Hinterachse verteilt ist. Weiterhin kann - natürlich noch vor dem Ankuppeln des Anhängers - zunächst eine Ermittlung für den über die Vorderachse und über die Hinterachse des Zugfahrzeugs übertragenen Anteil der Masse des Zugfahrzeugs erfolgen. Auch können die Werte aus Unterlagen bekannt sein, beispielsweise dem technischen Datenblatt des PKW. Gegebenenfalls kann der Auswertungseinrichtung 3 über eine Schnittstelle auch von der Bedienperson ein entsprechender Wert vorgegeben werden. Falls das erfindungsgemäße Auswertungsverfahren für die Achse des PKW-Anhängers und die Hinterachse des Zugfahrzeugs als Koppelbereiche 9, 10 durchgeführt wird, kann die Auswertungseinrichtung 3 gegebenenfalls die Stützlast des PKW-Anhängers durch Subtrahieren des ohne PKW-Anhänger über die Hinterachse des Zugfahrzeugs auf den Boden übertragenen Anteils der Masse des Zugfahrzeugs von der ermittelten Masse m2 ermitteln.

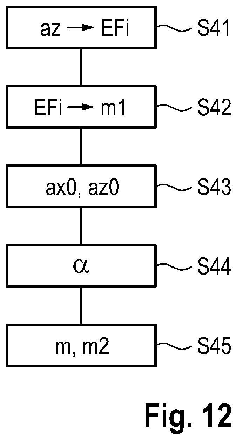

Weiterhin ist auch möglich, dass die Auswertungseinrichtung 3 auf die erfindungsgemäße Vorgehensweise, also basierend auf der entsprechenden Eigenfrequenz EFi, als Eigenschaft der Einrichtung 1 nur eine der beiden Teilmassen m1, m2 ermittelt. Ohne Beschränkung der Allgemeinheit kann hierbei angenommen werden, dass dies die Teilmasse m1 ist, mit der die Einrichtung 1 über den ersten Koppelbereich 9 und dessen Federung 8 auf das Bezugssystem 7 einwirkt. Auch in diesem Fall können jedoch die Masse m und damit auch die Teilmasse m2 ermittelt werden. Dies wird nachstehend in Verbindung mit den FIG 11 und 12 näher erläutert.

In diesem Fall wird entsprechend der Darstellung in FIG 11 ein weiteres der Signale ax, ay, az der Sensoren 2 erfasst - hier das Signal ax. Dieses Signal ax ist (zumindest im wesentlichen) für eine Größe in der Horizontalrichtung x charakteristisch, also den Weg oder eine zeitliche Ableitung des Weges der Einrichtung 1 am Ort des Sensors 2. Meist ist sogar analog zu den FIG 9 und 10 ein weiteres der Signale ax, ay, az der Sensoren 2 - hier das Signal ay - für eine weitere korrespondierende Größe (zumindest im wesentlichen) in der weiteren Horizontalrichtung y charakteristisch. Im Rahmen der vorliegenden Erfindung ist die weitere Größe, im Ergebnis also das Signal ay, jedoch von untergeordneter Bedeutung.

Sofern die von den Sensoren 2 gelieferten Signale ax, ay, az konkret Beschleunigungssignale sind, kann die Auswertungseinrichtung 3 anhand der Signale ax und az einen Neigungswinkel $\alpha$ der Einrichtung 1 innerhalb einer von den Richtungen x und z aufgespannten Ebene ermitteln. Beispielsweise kann die Auswertungseinrichtung 3 den Offset a0 für die Auswertung des Signals ax und den Offset a0 für die Auswertung des Signals az ermitteln. Diese beiden Offsets werden nachstehend zur Unterscheidung voneinander als ax0 und az0 bezeichnet.

Der Offset ax0 weist, sofern der Neigungswinkel $\alpha$ den Wert 0 aufweist, in aller Regel den Wert Null auf. Der Offset az0 hingegen weist aufgrund der Erdbeschleunigung in aller Regel einen Wert größer als Null auf. Unter der üblichen Voraussetzung, dass die Signale ax, ay, az orthogonal zueinander sind, kann der Neigungswinkel $\alpha$ anhand der Beziehung

$$\tan \alpha = ax0 / az0 \qquad\qquad (4)$$

bestimmt werden.

Alternativ zu einer Bestimmung des Neigungswinkels $\alpha$ anhand der beiden Offsets ax0 und az0 ist es auch möglich, dass die Auswertungseinrichtung 3 die entsprechenden Signale ax, az in einem schwingungsfreiem Zustand der Einrichtung 1 entgegennimmt und daraus den Neigungswinkel $\alpha$ ermittelt. Diese Vorgehensweise ist völlig gleichwertig zu einer Ermittlung anhand der Offsets ax0, az0.

Die Ermittlung des Neigungswinkels $\alpha$ kann insbesondere dann sinnvoll sein, wenn die Eigenfrequenz EFi für den zweiten Koppelbereich 10 durch die Eigenfrequenz EFi für den ersten Koppelbereich 9 verdeckt (maskiert) ist.

Die Horizontalrichtung x ist in diesem Fall vorzugsweise derart gewählt, dass eine Verbindungslinie des ersten Koppelbereichs 9 und des zweiten Koppelbereichs 10 in der von den Richtungen x und z aufgespannten Ebene liegt.

In diesem Fall kann so vorgegangen werden, wie dies nachstehend in Verbindung mit FIG 12 erläutert wird.

Gemäß FIG 12 ermittelt die Auswertungseinrichtung 3 in einem Schritt S41 auf die erfindungsgemäße Art und Weise durch Auswerten des Signals az die zugehörige Eigenfrequenz EFi. Diese ist für die Schwingung im ersten Koppelbereich 9 und damit für die Federcharakteristik der Federung 8 im ersten Koppelbereich 9 und die Teilmasse m1 charakteristisch. Da die entsprechende Federcharakteristik als bekannt vorausgesetzt wird, kann die Auswertungseinrichtung 3 somit in einem Schritt S42 anhand der Eigenfrequenz EFi = f - beispielsweise unter Verwertung der Beziehung 3 - die Teilmasse m1 ermitteln.

In einem Schritt S43 ermittelt die Auswertungseinrichtung 3 die beiden Offsets ax0 und az0, sei es durch Auswerten der jeweiligen harmonischen Schwingung, sei es durch Entgegennehmen des jeweiligen Offsets ax0, az0 von den Sensoren 2 in einem schwingungsfreien Zustand der Einrichtung 1. In einem Schritt S44 ermittelt die Auswertungseinrichtung 3 den Neigungswinkel $\alpha$. Ausgehend vom Neigungswinkel $\alpha$ kann die Auswertungseinrichtung in einem Schritt S45 auch die Teilmasse m2 und die gesamte Masse m der Einrichtung 1 ermitteln. Dieser Ansatz beruht auf dem Gedanken, dass aufgrund der federnden Lagerung in den beiden Koppelbereichen 9, 10 sowohl die Federung 8 im ersten Koppelbereich 9 als auch die Federung 8 im zweiten Koppelbereich 10 nachgeben, wobei das Ausmaß, in dem die beiden Federungen 8 nachgeben, von der jeweiligen Teilmasse m1, m2 abhängt und somit den Neigungswinkel $\alpha$ beeinflusst. Wenn - nunmehr zur Unterscheidung voneinander - beispielsweise im Falle von Federkonstanten mit k1 und k2 die Federkonstanten im ersten und im zweiten Koppelbereich 9, 10 bezeichnet werden, federn die Federungen 8 in den beiden Koppelbereichen 9, 10 gegenüber dem vollständig unbelasteten Zustand um

$$\delta h1 = m1 / k1 \tag{5}$$

und

$$\delta h2 = m2 / k2 \tag{6}$$

ein. Somit ergibt sich eine Höhendifferenz

$$\delta h = \delta h2 - \delta h1 = m2 / k2 - m1 / k1. \tag{7}$$

In Verbindung mit dem Abstand d der beiden Koppelbereiche 9, 10 voneinander (beispielsweise bei einem PKW dem Radstand und bei einem einachsigen PKW-Anhänger dem Abstand der Achse des Anhängers von der Kugelkopfkupplung) steht die Höhendifferenz $\delta h$ somit in einer eindeutigen funktionalen Beziehung zum Neigungswinkel $\alpha$.
In einem Schritt S45 kann die Auswertungseinrichtung 3 somit anhand der bekannten Teilmasse m1 und der bekannten Federcharakteristiken (beispielsweise der Federkonstanten k1, k2) und dem Neigungswinkel $\alpha$ auch die Teilmasse m2 und damit die Masse m der Einrichtung 1 ermitteln. Gegebenenfalls kann in der Auswertungseinrichtung 3 ein entsprechendes mehrdimensionales Kennlinienfeld hinterlegt sein, dem als Eingangsgrößen die Eigenfrequenz EFi und der Neigungswinkel $\alpha$ vorgegeben werden und das als Ausgangsgrößen die Masse m der Einrichtung 1 und die Lastverteilung auf die beiden Koppelbereiche 9, 10 oder vergleichbare Werte zur Verfügung stellt. Gegebenenfalls kann auch als Offset ein Null-Neigungswinkel mit verwertet werden, der in einem Basiszustand auftritt, beispielsweise in einem Zustand, in dem der unbeladene PKW-Anhänger - bei dem die Radlast und die Stützlast bekannt sind - an das Zugfahrzeug angekuppelt ist.
Ausgehend von der ermittelten Masse m sind natürlich weitergehende Auswertungen möglich. Beispielsweise kann bei einem angetriebenen Straßenfahrzeug oder einem Anhänger, ausgehend von der Leermasse, die Zuladung ermittelt werden.
Auswertungsergebnisse - dies gilt gleichermaßen für die direkt ermittelte Eigenschaft m, m1, m2, k der Einrichtung 1 wie beispielsweise deren Masse m als auch für hiervon abgeleitete Erkenntnisse wie beispielsweise die Zuladung oder bei einer Anhängerkupplung die Stützlast oder die Überschreitung eines zulässigen Gesamtgewichts - können an eine Bedienperson ausgegeben werden. Daten, die für eine ordnungsgemäße Auswertung erforderlich sind wie beispielsweise bei einem Straßenfahrzeug (auch einem PKW-Anhänger) ein Leergewicht, ein Achsabstand und andere mehr, können über eine entsprechend vorbereitete Schnittstelle vorgegeben werden. Die Kommunikation mit der Bedienperson kann über ein eigenes Display und eine eigene Eingabeeinrichtung der Auswertungseinrichtung 3 erfolgen. Es können auch entsprechende Komponenten der Einrichtung 1 verwendet werden, beispielsweise ein Display und eine Tastatur eines PKW.
Die vorliegende Erfindung weist viele Vorteile auf. So ist beispielsweise eine zuverlässige und hochgenaue Auswertung (Genauigkeit auf rund 1 % genau) möglich, manchmal sogar besser. Bei einem PKW-Anhänger entspricht dies einer Genauigkeit im einstelligen kg-Bereich. Ein etwaiger Puls zur Anregung von Schwingungen kann sehr gering sein. Oftmals reicht es aus, beispielsweise bei einem PKW-Anhänger Elemente im einstelligen kg-Bereich zuzuladen. In vielen Fällen sind weiterhin die Sensoren 2 an der Einrichtung 1 aus Gründen, die nichts mit der erfindungsgemäßen Auswertung zu tun haben, ohnehin vorhanden, beispielsweise Beschleunigungssensoren zur Schleudererkennung bei einem PKW. In diesem Fall verringern sich die Kosten.
Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

Bezugszeichenliste

| | |
|---|---|
| 1 | Einrichtung |
| 2 | Sensoren |
| 3 | Auswertungseinrichtung |
| 4 | Schnittstelle |
| 5 | Computerprogramm |
| 6 | Maschinencode |
| 7 | Bezugssystem |
| 8 | Federung |
| 9, 10 | Koppelbereiche |
| A0 | Parameter (Anfangsamplitude) |
| a0 | Parameter (Offset) |
| ax0, az0 | Offsets |
| ax, ay, az | Signale |
| d | Abstand |
| EFi | Eigenfrequenzen |
| f | Frequenz (auch Parameter) |
| fM | mittlere Frequenz |
| fmax | obere Grenzfrequenz |
| fmin | untere Grenzfrequenz |
| k | Federkonstante |
| m | Masse |
| m1, m2 | Teilmassen |
| S1 bis S45 | Schritte |
| t | Zeit |
| T | Auswertungszeitraum |
| T' | Erfassungszeitraum |
| T0 | Parameter (Zeitkonstante) |
| x, y, z | Richtungen |
| $\alpha$ | Neigungswinkel |
| $\delta$am in | Erfassungsgenauigkeit |
| $\delta$f | Abstand |
| $\delta$fmin | Mindestabstand |
| $\delta$t | zeitlicher Abstand |
| $\varphi$0 | Parameter (Phasenversatz) |

**Patentansprüche**

1. Auswertungsverfahren für Signale (ax, ay, az) einer Anzahl von mit einer Einrichtung (1) verbundenen Sensoren (2) durch eine Auswertungseinrichtung (3),

   - wobei die Auswertungseinrichtung (3) ein jeweiliges von einem der Sensoren (2) erfasstes Signal (ax, ay, az) während eines Erfassungszeitraums (T') kontinuierlich entgegennimmt und speichert, so dass die Auswertungseinrichtung (3) für das Signal (ax, ay, az) einen Signalverlauf generiert,
   - wobei die Signale (ax, ay, az) für einen von der Einrichtung (1) am Ort des jeweiligen Sensors (2) in einer jeweiligen Richtung (x, y, z) zurückgelegten Weg oder für eine zeitliche Ableitung dieses Weges charakteristisch sind,
   - wobei die Auswertungseinrichtung (3) einen im Erfassungszeitraum (T') enthaltenen Zeitraum als Auswertungszeitraum (T) bestimmt,
   - wobei die Auswertungseinrichtung (3) den Signalverlauf des Auswertungszeitraums (T) einer Bandpassfilterung mit einer unteren und einer oberen Grenzfrequenz (fmin, fmax) unterzieht und so einen gefilterten Signalverlauf ermittelt,
   - wobei die Auswertungseinrichtung (3) eine parametrierte Form einer gedämpften harmonischen Schwingung ansetzt,
   - wobei die Auswertungseinrichtung (3) mittels einer Regression des gefilterten Signalverlaufs gemäß einem Optimierungskriterium die Frequenz (f) der gedämpften harmonischen Schwingung ermittelt,
- wobei die Auswertungseinrichtung (3) die so ermittelte Frequenz (f) als eine Eigenfrequenz (EFi) der Einrichtung (1) festlegt,
- wobei die Auswertungseinrichtung (3) unter Verwertung der für die Signale (ax, ay, az) der Sensoren (2) ermittelten Eigenfrequenzen (EFi) eine Eigenschaft (m, m1, m2, k) der Einrichtung (1) ermittelt.

2. Auswertungsverfahren nach Anspruch 1,
**dadurch gekennzeichnet,**
**dass** die Auswertungseinrichtung (3) mittels einer Frequenzanalyse des Signalverlaufs ein zugehöriges Spektrum ermittelt und dass die untere Grenzfrequenz (fmin) und die obere Grenzfrequenz (fmax) basierend auf dem Spektrum und dem Auswertungszeitraum (T) ermittelt werden.

3. Auswertungsverfahren nach Anspruch 2,
**dadurch gekennzeichnet,**
**dass** eine Frequenz (f), bei der das Spektrum einen Maximalwert aufweist, als eine mittlere Frequenz (fM) bestimmt wird, dass anhand des Auswertungszeitraums (T) ein Mindestabstand ($\delta$fmin) bestimmt wird und dass die untere Grenzfrequenz (fmin) und die obere Grenzfrequenz (fmax) derart bestimmt werden, dass sie von der mittleren Frequenz (fM) jeweils mindestens um den Mindestabstand ($\delta$fmin) von der mittleren Frequenz (fM) beabstandet sind.

4. Auswertungsverfahren nach Anspruch 1, 2 oder 3,
**dadurch gekennzeichnet,**
**dass** die Einrichtung (1) vor dem Beginn des Auswertungszeitraums (T) durch eine externe Anregung zu einer Schwingung angeregt wird und während des Auswertungszeitraums (T) keine Anregung erfolgt.

5. Auswertungsverfahren nach einem der obigen Ansprüche,
**dadurch gekennzeichnet,**
**dass** die Bandpassfilterung eine Nullphasenfilterung ist.

6. Auswertungsverfahren nach einem der obigen Ansprüche,
**dadurch gekennzeichnet,**
**dass** die gedämpfte harmonische Schwingung die Form

$$a(t) = A0 \cdot \exp(-t/T0) \cdot \cos(2\pi f t + \varphi 0) + a0$$

mit den Parametern A0, T0, f, $\varphi$0 und a0, aufweist, wobei A0 eine Anfangsamplitude, T0 eine Zeitkonstante einer Dämpfung, f die Frequenz, $\varphi$0 ein Phasenversatz und a0 ein Offset der gedämpften Schwingung sind, a die jeweilige Elongation der gedämpften Schwingung ist und t die Zeit ist.

7. Auswertungsverfahren nach einem der obigen Ansprüche,
**dadurch gekennzeichnet,**
**dass** die Auswertungseinrichtung für die Signale (ax, ay, az) mehrerer Sensoren (2) jeweils mindestens eine vorläufige Eigenfrequenz (EFi) der Einrichtung (1) ermittelt und dass die Auswertungseinrichtung (3) als Eigenfrequenz (EFi) der Einrichtung (1) mindestens eine der vorläufigen Eigenfrequenzen (EFi) festlegt, die bei den Signalen (ax, ay, az) mehrerer der Sensoren (2) übereinstimmen oder für die Signale (ax, ay, az) mehrerer Sensoren (2) jeweils mindestens eine Eigenfrequenz (EFi) der Einrichtung (1) und hierauf aufbauend eine vorläufige Eigenschaft (m, m1, m2, k) der Einrichtung (1) ermittelt und als Eigenschaft (m, m1, m2, k) der Einrichtung (1) einen Wert übernimmt, der für mehrere der Sensoren (2) ermittelt wurde.

8. Auswertungsverfahren nach einem der obigen Ansprüche,
**dadurch gekennzeichnet,**
**dass** die Einrichtung (1) relativ zu einem ortsfesten Bezugssystem (7) mittels einer Federung (8) federnd gehalten ist, dass mindestens eines der Signale (ax, ay, az) für einen Weg oder eine zeitliche Ableitung des Weges der Einrichtung (1) in einer im wesentlichen vertikal verlaufenden ersten Richtung (z) am Ort des entsprechenden Sensors (2) charakteristisch ist und dass die Auswertungseinrichtung (3) als Eigenschaft (m, m1, m2, k) der Einrichtung (1) eine Masse (m) der Einrichtung (1) oder eine von der Masse (m) der Einrichtung (1) abhängige Eigenschaft (m1, m2) der Einrichtung (1) oder eine Federcharakteristik (k) der Federung (8) ermittelt.

**9.** Auswertungsverfahren nach Anspruch 8,
**dadurch gekennzeichnet,**
**dass** ein weiteres der Signale (ax, ay, az) der Sensoren (2) für einen Weg oder eine zeitliche Ableitung des Weges der Einrichtung (1) in einer im wesentlichen orthogonal zur ersten Richtung (z) verlaufenden zweiten Richtung (x) am Ort des entsprechenden Sensors (2) charakteristisch ist.

**10.** Auswertungsverfahren nach Anspruch 9,
**dadurch gekennzeichnet,**
**dass** die Signale (ax, ay, az) Beschleunigungssignale sind und dass die Auswertungseinrichtung (3) anhand der von der Auswertungseinrichtung (3) von den Sensoren (2) entgegengenommenen Signale (ax, ay, az) einen Neigungswinkel ($\alpha$) der Einrichtung (1) innerhalb einer von der ersten und der zweiten Richtung (z, x) aufgespannten Ebene ermittelt.

**11.** Auswertungsverfahren nach Anspruch 10,
**dadurch gekennzeichnet,**
**dass** die Auswertungseinrichtung (3) die Signale (ax, az), anhand derer sie den Neigungswinkel ($\alpha$) ermittelt, in einem schwingungsfreiem Zustand der Einrichtung (1) entgegennimmt.

**12.** Auswertungsverfahren nach Anspruch 10 oder 11,
**dadurch gekennzeichnet,**
**dass** die ermittelte Eigenschaft (m1) der Einrichtung (1) eine Teilmasse (m1) der Einrichtung (1) ist, mit der die Einrichtung (1) über einen ersten Koppelbereich (9), an dem die Einrichtung (1) relativ zu dem ortsfesten Bezugssystem (7) federnd gehalten ist, auf das ortsfeste Bezugssystem (7) einwirkt, dass die Einrichtung (1) über einen zweiten Koppelbereich (10) relativ zu dem ortsfesten Bezugssystem (7) federnd gehalten ist, dass eine Verbindungslinie des ersten Koppelbereichs (9) und des zweiten Koppelbereichs (10) in von der ersten und der zweiten Richtung (z, x) aufgespannten Ebene liegt und dass die Auswertungseinrichtung (3) unter Verwertung der ermittelten Teilmasse (m1) und des ermittelten Neigungswinkels ($\alpha$) die Masse (m) der Einrichtung (1) ermittelt.

**13.** Computerprogramm, das Maschinencode (6) umfasst, der von einer mit einer Anzahl von Sensoren (2) datentechnisch verbundenen Auswertungseinrichtung (3) abarbeitbar ist, wobei die Abarbeitung des Maschinencodes (6) durch die Auswertungseinrichtung (3) bewirkt, dass die Auswertungseinrichtung (3) ein Auswertungsverfahren nach einem der obigen Ansprüche ausführt.

**14.** Auswertungseinrichtung, die eine Schnittstelle (4) zur datentechnischen Verbindung mit einer Anzahl von Sensoren (2) aufweist und mit einem Computerprogramm (5) nach Anspruch 12 programmiert ist, so dass sie im Betrieb ein Auswertungsverfahren nach einem der Ansprüche 1 bis 12 ausführt.

**15.** System, das aus einer Einrichtung (1), einer Anzahl von mit der Einrichtung (1) verbundenen Sensoren (2) und einer mit den Sensoren (2) datentechnisch verbundenen Auswertungseinrichtung (3) besteht, wobei die Auswertungseinrichtung (3) nach Anspruch 14 ausgebildet ist, die im Betrieb ein Auswertungsverfahren nach einem der Ansprüche 1 bis 12 ausführt.

**Geänderte Patentansprüche gemäss Regel 137(2) EPÜ.**

**1.** Auswertungsverfahren für Signale (ax, ay, az) einer Anzahl von mit einer Einrichtung (1) verbundenen Sensoren (2) durch eine Auswertungseinrichtung (3),

- wobei die Auswertungseinrichtung (3) ein jeweiliges von einem der Sensoren (2) erfasstes Signal (ax, ay, az) während eines Erfassungszeitraums (T') kontinuierlich entgegennimmt und speichert, so dass die Auswertungseinrichtung (3) für das Signal (ax, ay, az) einen Signalverlauf generiert,
- wobei die Signale (ax, ay, az) für einen von der Einrichtung (1) am Ort des jeweiligen Sensors (2) in einer jeweiligen Richtung (x, y, z) zurückgelegten Weg oder für eine zeitliche Ableitung dieses Weges charakteristisch sind,
- wobei die Auswertungseinrichtung (3) einen im Erfassungszeitraum (T') enthaltenen Zeitraum, während dessen keine Anregung erfolgt, sondern eine freie Schwingung erfolgt, als Auswertungszeitraum (T) bestimmt,
- wobei die Auswertungseinrichtung (3) den Signalverlauf des Auswertungszeitraums (T) einer Bandpassfilterung mit einer unteren und einer oberen Grenzfrequenz (fmin, fmax) unterzieht und so einen gefilterten Signalverlauf ermittelt,

- wobei die Auswertungseinrichtung (3) mittels einer Frequenzanalyse des Signalverlaufs ein zugehöriges Spektrum ermittelt und die untere Grenzfrequenz (fmin) und die obere Grenzfrequenz (fmax) basierend auf dem Spektrum und dem Auswertungszeitraum (T) ermittelt werden,

- wobei die Auswertungseinrichtung (3) Parameter (A0, T0, f, $\phi$0, a0) einer gedämpften harmonischen Schwingung ansetzt,

- wobei die gedämpfte harmonische Schwingung die Form

$$a(t) = A0 \cdot \exp(-t/T0) \cdot \cos(2\pi ft + \varphi 0) + a0$$

mit den Parametern A0, T0, f, $\phi$0 und a0 aufweist, wobei A0 eine Anfangsamplitude, T0 eine Zeitkonstante einer Dämpfung, f die Frequenz, $\phi$0 ein Phasenversatz und a0 ein Offset der gedämpften Schwingung sind, a die jeweilige Elongation der gedämpften Schwingung ist und t die Zeit ist,

- wobei die Auswertungseinrichtung (3) mittels einer Regression des gefilterten Signalverlaufs die Parameter (A0, T0, f, $\phi$0, a0) der gedämpften harmonischen Schwingung derart ermittelt, dass die durch die Parameter (A0, T0, f, $\phi$0, a0) festgelegte gedämpfte harmonische Schwingung gemäß einem Optimierungskriterium so gut wie möglich mit dem gefilterten Signalverlauf (a'(t)) übereinstimmt,

- wobei die Auswertungseinrichtung (3) die so ermittelte Frequenz (f) als eine Eigenfrequenz (EFi) der Einrichtung (1) festlegt,

- wobei die Auswertungseinrichtung (3) unter Verwertung der für die Signale (ax, ay, az) der Sensoren (2) ermittelten Eigenfrequenzen (EFi) eine Eigenschaft (m, m1, m2, k) der Einrichtung (1) ermittelt.

2. Auswertungsverfahren nach Anspruch 1,
**dadurch gekennzeichnet,**
**dass** eine Frequenz (f), bei der das Spektrum einen Maximalwert aufweist, als eine mittlere Frequenz (fM) bestimmt wird, dass anhand des Auswertungszeitraums (T) ein Mindestabstand ($\delta$fmin) bestimmt wird und dass die untere Grenzfrequenz (fmin) und die obere Grenzfrequenz (fmax) derart bestimmt werden, dass sie von der mittleren Frequenz (fM) jeweils mindestens um den Mindestabstand ($\delta$fmin) von der mittleren Frequenz (fM) beabstandet sind.

3. Auswertungsverfahren nach Anspruch 2,
**dadurch gekennzeichnet,**
**dass** der Mindestabstand ($\delta$fmin) gleich dem Kehrwert des Auswertungszeitraums (T) ist und dass die untere Grenzfrequenz (fmin) und die obere Grenzfrequenz (fmax) derart bestimmt werden, dass sie von der mittleren Frequenz (fM) jeweils einen Abstand ($\delta$f) aufweisen, der zwischen dem Mindestabstand ($\delta$fmin) und dem Doppelten des Mindestabstands ($\delta$fmin) liegt.

4. Auswertungsverfahren nach Anspruch 1, 2 oder 3,
**dadurch gekennzeichnet,**
**dass** die Einrichtung (1) vor dem Beginn des Auswertungszeitraums (T) durch eine externe Anregung zu einer Schwingung angeregt wird.

5. Auswertungsverfahren nach einem der obigen Ansprüche,
**dadurch gekennzeichnet,**
**dass** die Bandpassfilterung eine Nullphasenfilterung ist.

6. Auswertungsverfahren nach einem der obigen Ansprüche,
**dadurch gekennzeichnet,**
**dass** die Auswertungseinrichtung für die Signale (ax, ay, az) mehrerer Sensoren (2) jeweils mindestens eine vorläufige Eigenfrequenz (EFi) der Einrichtung (1) ermittelt und dass die Auswertungseinrichtung (3) als Eigenfrequenz (EFi) der Einrichtung (1) mindestens eine der vorläufigen Eigenfrequenzen (EFi) festlegt, die bei den Signalen (ax, ay, az) mehrerer der Sensoren (2) übereinstimmen oder für die Signale (ax, ay, az) mehrerer Sensoren (2) jeweils mindestens eine Eigenfrequenz (EFi) der Einrichtung (1) und hierauf aufbauend eine vorläufige Eigenschaft (m, m1, m2, k) der Einrichtung (1) ermittelt und als Eigenschaft (m, m1, m2, k) der Einrichtung (1) einen Wert übernimmt, der für mehrere der Sensoren (2) ermittelt wurde.

7. Auswertungsverfahren nach einem der obigen Ansprüche,
**dadurch gekennzeichnet,**
**dass** die Einrichtung (1) relativ zu einem ortsfesten Bezugssystem (7) mittels einer Federung (8) federnd gehalten ist, dass mindestens eines der Signale (ax, ay, az) für einen Weg oder eine zeitliche Ableitung des Weges der Einrichtung (1) in einer im wesentlichen vertikal verlaufenden ersten Richtung (z) am Ort des entsprechenden Sensors (2) charakteristisch ist und dass die Auswertungseinrichtung (3) als Eigenschaft (m, m1, m2, k) der Einrichtung (1) eine Masse (m) der Einrichtung (1) oder eine von der Masse (m) der Einrichtung (1) abhängige Eigenschaft (m1, m2) der Einrichtung (1) oder eine Federcharakteristik (k) der Federung (8) ermittelt.

8. Auswertungsverfahren nach Anspruch 7,
**dadurch gekennzeichnet,**
**dass** ein weiteres der Signale (ax, ay, az) der Sensoren (2) für einen Weg oder eine zeitliche Ableitung des Weges der Einrichtung (1) in einer im wesentlichen orthogonal zur ersten Richtung (z) verlaufenden zweiten Richtung (x) am Ort des entsprechenden Sensors (2) charakteristisch ist.

9. Auswertungsverfahren nach Anspruch 8,
**dadurch gekennzeichnet,**
**dass** die Signale (ax, ay, az) Beschleunigungssignale sind und dass die Auswertungseinrichtung (3) anhand der von der Auswertungseinrichtung (3) von den Sensoren (2) entgegengenommenen Signale (ax, ay, az) einen Neigungswinkel ($\alpha$) der Einrichtung (1) innerhalb einer von der ersten und der zweiten Richtung (z, x) aufgespannten Ebene ermittelt.

10. Auswertungsverfahren nach Anspruch 9,
**dadurch gekennzeichnet,**
**dass** die Auswertungseinrichtung (3) die Signale (ax, az), anhand derer sie den Neigungswinkel ($\alpha$) ermittelt, in einem schwingungsfreien Zustand der Einrichtung (1) entgegennimmt.

11. Auswertungsverfahren nach Anspruch 9 oder 10,
**dadurch gekennzeichnet,**
**dass** die ermittelte Eigenschaft (m1) der Einrichtung (1) eine Teilmasse (m1) der Einrichtung (1) ist, mit der die Einrichtung (1) über einen ersten Koppelbereich (9), an dem die Einrichtung (1) relativ zu dem ortsfesten Bezugssystem (7) federnd gehalten ist, auf das ortsfeste Bezugssystem (7) einwirkt, dass die Einrichtung (1) über einen zweiten Koppelbereich (10) relativ zu dem ortsfesten Bezugssystem (7) federnd gehalten ist, dass eine Verbindungslinie des ersten Koppelbereichs (9) und des zweiten Koppelbereichs (10) in von der ersten und der zweiten Richtung (z, x) aufgespannten Ebene liegt und dass die Auswertungseinrichtung (3) unter Verwertung der ermittelten Teilmasse (m1) und des ermittelten Neigungswinkels ($\alpha$) die Masse (m) der Einrichtung (1) ermittelt.

12. Computerprogramm, das Maschinencode (6) umfasst, der von einer mit einer Anzahl von Sensoren (2) datentechnisch verbundenen Auswertungseinrichtung (3) abarbeitbar ist, wobei die Abarbeitung des Maschinencodes (6) durch die Auswertungseinrichtung (3) bewirkt, dass die Auswertungseinrichtung (3) ein Auswertungsverfahren nach einem der obigen Ansprüche ausführt.

13. Auswertungseinrichtung, die eine Schnittstelle (4) zur datentechnischen Verbindung mit einer Anzahl von Sensoren (2) aufweist und mit einem Computerprogramm (5) nach Anspruch 12 programmiert ist, so dass sie im Betrieb ein Auswertungsverfahren nach einem der Ansprüche 1 bis 11 ausführt.

14. System, das aus einer Einrichtung (1), einer Anzahl von mit der Einrichtung (1) verbundenen Sensoren (2) und einer mit den Sensoren (2) datentechnisch verbundenen Auswertungseinrichtung (3) besteht, wobei die Auswertungseinrichtung (3) nach Anspruch 13 ausgebildet ist, die im Betrieb ein Auswertungsverfahren nach einem der Ansprüche 1 bis 11 ausführt.

**Fig. 1**

**Fig. 2**

**Fig. 3**

**Fig. 4**

Fig. 5

Fourier (az(t)) — S21

fM — S22

$\delta fmin = 1/T$ — S23

$\delta f \in [\delta fmin, 2\delta fmin]$ — S24

$fmin = fM-\delta f$
$fmax = fM+\delta f$ — S25

Fig. 6

**Fig. 7**

**Fig. 8**

**Fig. 9**

**Fig. 10**

**Fig. 11**

az ⟶ EFi — S41

EFi ⟶ m1 — S42

ax0, az0 — S43

α — S44

m, m2 — S45

**Fig. 12**

Europäisches Patentamt
European Patent Office
Office européen des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2023/001967 A1 (KOBAYASHI YOSHIHIRO [JP]) 5. Januar 2023 (2023-01-05) | 1-11, 13-15 | INV. G01H1/00 |
| A | * Ansprüche 1, 11 * <br> * Absatz [0063] * <br> * Absatz [0072] * <br> * Absatz [0136] – Absatz [0137] * <br> * Absatz [0152] – Absatz [0159] * <br> * Absatz [0217] * <br> * Absatz [0229] * <br> * Abbildungen 1, 3, 4, 5, 29 * <br> ----- | 12 | G01G3/16 |
| Y | EP 0 775 295 B1 (SENSE AB Q [SE]) 6. September 2000 (2000-09-06) | 1-11, 13-15 | |
| A | * Anspruch 1 * <br> * Formel 8; <br> Seite 6 * <br> * Absatz [0004] * <br> * Absatz [0022] * <br> * Abbildung 5 * <br> ----- | 12 | |
| A | WO 2015/060319 A1 (UNIV TOKYO NAT UNIV CORP [JP]) 30. April 2015 (2015-04-30) <br> * Ansprüche 1, 6, 9 * <br> * Abbildung 3 * <br> ----- | 1-15 | **RECHERCHIERTE SACHGEBIETE (IPC)** <br><br> G01H <br> G01G |
| A | WO 2020/237372 A1 (BLACKBERRY LTD [CA]) 3. Dezember 2020 (2020-12-03) <br> * Absatz [0097] * <br> * Absatz [0107] * <br> * Absatz [0135] * <br> * Abbildungen 1, 5-8 * <br> ----- | 1-15 | |
| A | DE 43 00 677 A1 (KOLB HANS DR [DE]) 14. Juli 1994 (1994-07-14) <br> * Ansprüche 1, 4, 5 * <br> * Seite 4, Zeile 1 – Zeile 6 * <br> ----- <br> -/-- | 1-15 | |

Der vorliegende Recherchenbericht wurde für alle Patentansprüche erstellt

| Recherchenort | Abschlußdatum der Recherche | Prüfer |
|---|---|---|
| Den Haag | 26. Oktober 2023 | Tympel, Jens |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 23 02 0247

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 5 227 982 A (KIPPLE BLAIR M [US] ET AL) 13. Juli 1993 (1993-07-13) <br> * Ansprüche 1, 2 * <br> * Spalte 3, Zeile 15 – Zeile 25 * <br> * Abbildungen 1, 2, 3 * <br> ----- | 1-15 | |
| A | KR 101 740 896 B1 (KOREA MACH & MATERIALS INST [KR]) 29. Mai 2017 (2017-05-29) <br> * Ansprüche 1, 2 * <br> * Absatz [0012] * <br> * Absatz [0036] * <br> * Abbildung 4 * <br> ----- | 1-15 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 26. Oktober 2023 | Tympel, Jens |

EPO FORM 1503 03.82 (P04C03)

# EP 4 467 941 A1

## ANHANG ZUM EUROPÄISCHEN RECHERCHENBERICHT
## ÜBER DIE EUROPÄISCHE PATENTANMELDUNG NR.

EP 23 02 0247

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-10-2023

| Im Recherchenbericht angeführtes Patentdokument | Datum der Veröffentlichung | Mitglied(er) der Patentfamilie | Datum der Veröffentlichung |
|---|---|---|---|
| US 2023001967 A1 | 05-01-2023 | CN 115541152 A | 30-12-2022 |
| | | JP 2023006238 A | 18-01-2023 |
| | | US 2023001967 A1 | 05-01-2023 |
| EP 0775295 B1 | 06-09-2000 | AU 5783796 A | 21-11-1996 |
| | | DE 69610183 T2 | 21-06-2001 |
| | | EP 0775295 A1 | 28-05-1997 |
| | | US 6006589 A | 28-12-1999 |
| | | WO 9635103 A1 | 07-11-1996 |
| WO 2015060319 A1 | 30-04-2015 | JP 6352289 B2 | 04-07-2018 |
| | | JP WO2015060319 A1 | 09-03-2017 |
| | | US 2016265960 A1 | 15-09-2016 |
| | | WO 2015060319 A1 | 30-04-2015 |
| WO 2020237372 A1 | 03-12-2020 | CA 3141653 A1 | 03-12-2020 |
| | | CN 114174775 A | 11-03-2022 |
| | | EP 3953669 A1 | 16-02-2022 |
| | | US 2020378821 A1 | 03-12-2020 |
| | | WO 2020237372 A1 | 03-12-2020 |
| DE 4300677 A1 | 14-07-1994 | KEINE | |
| US 5227982 A | 13-07-1993 | KEINE | |
| KR 101740896 B1 | 29-05-2017 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160265960 A1
- JP H07103834 A

- DE 102006057436 A1
- DE 4300677 A1